# EUROPEAN PATENT SPECIFICATION

(11) **EP 3 511 271 B1**
(45) Date of publication and mention of the grant of the patent: **03.01.2024**
(21) Application number: 18151646.9
(22) Date of filing: 15.01.2018
(51) Int. Cl.: B65G 37/02, B66F 9/06, G05D 1/02

(54) **TRANSPORT APPARATUS FOR OBJECT HANDLING SYSTEM, AND OBJECT HANDLING SYSTEM INCORPORATING SUCH APPARATUS**
TRANSPORTVORRICHTUNG FÜR EIN OBJEKTHANDHABUNGSSYSTEM UND OBJEKTHANDHABUNGSSYSTEM MIT SOLCH EINER VORRICHTUNG
APPAREIL DE TRANSPORT POUR SYSTÈME DE MANIPULATION D'OBJETS ET SYSTÈME DE MANIPULATION D'OBJETS INCORPORANT UN TEL APPAREIL

(43) Date of publication of application: 17.07.2019
(73) Proprietor: The Automation Group Limited, Gateshead Tyne and Wear NE10 0ES (GB)
(72) Inventor: SMITH, Christopher, Gateshead, Tyne & Wear, NE10 OES (GB)
(74) Representative: Murgitroyd & Company

(56) References cited:
- EP-A1- 2 948 821
- FR-A1- 3 039 104
- JP-A- H09 185 409
- JP-A- H10 105 238
- US-A1- 2007 297 879
- US-B1- 9 378 482

## Description

The present invention relates to an object handling system, and relates particularly, but not exclusively, to an object handling system for use in a queuing system for goods.

Objects such as trolleys, pallets or similar containers are often used to enable transfer of articles between different locations, for example where such articles are loaded into or unloaded from transport vehicles. Movement of trolleys or pallets is often carried out manually, or by means of forklift trucks, conveyor systems or automated guided vehicles. Within such systems, there is often a requirement to create a queue of objects. For example in one method, particularly for use with pallets, items are loaded onto an input end of a driven roller conveyor system and transferred automatically to an outfeed end by conveyor rollers. Items are prevented from leaving the outfeed end by a stop mechanism, as a result of which items queue up behind one another so that the first item to enter the queue is the first to leave. This arrangement suffers from the drawback that when an item is stopped on the conveyor, it must have a relatively smooth or low friction base, as the driven conveyor rollers continue to rotate, causing significant loading of the stop mechanism. In particular, the inertia generated by heavy items moving along the conveyor and being brought to rest by a stop mechanism results in high forces being applied to the stop mechanism during deceleration of the items. This problem can be partially mitigated by separating the conveyor into sections that are controlled and driven separately and using stop mechanisms with inbuilt dampers, but this significantly increases the cost and complexity of the handling system.

In addition, object queues need to be positioned above floor level to provide sufficient space for motor drives and conveyor rollers and associated framework, as a result of which lift devices are often required to move items to the required height for entry into and exit from the object queue. Another alternative is to operate the queue totally manually at floor level. Operators push trolleys along a floor guide to assist in aligning the wheels correctly.

These arrangements suffer from the drawback that manual involvement is required in order to enter trolleys into the input of the queue, remove trolleys from the queue, and move trolleys along the queue to eliminate empty spaces as trolleys are removed from the end of the queue.

Preferred embodiments of the present invention seek to overcome one or more of the above disadvantages.

JP H10 105238 A discloses an object handing system according to the preamble of claim 1.

According to the present invention, there is provided an object handling system as defined in claim 1.

By enabling the apparatus to move along the track without engaging an object, this provides the advantage of enabling improved control of the position of objects, while also avoiding the necessity of large drive and stop mechanisms, thereby reducing the cost of the system. The engaging means may be moveable relative to an upper surface of a body of the apparatus between said first condition, in which the engaging means protrudes from the upper surface, and said second condition.

This provides the advantage of enabling simple construction and operation of the engaging means.

The engaging means may be adapted to engage an object adjacent a lower surface of said object.

The second detector means may be adapted to detect a marker on a lower surface of at least one said object.

The second detector means may include at least one proximity detector.

This provides the advantage of enabling simple and inexpensive construction of the apparatus.

The second detector means may include a plurality of proximity detectors adapted to detect a plurality of features on a lower surface of at least one said object.

This provides the advantage of enabling simple and inexpensive construction of an accurate position detector.

The first detector means may be adapted to detect the position of the apparatus relative to the track in response to detection of a said marker by said second detector means.

This provides the advantage of reducing electrical power consumption by only operating the first detector means in the event of successful operation of the second detector means.

The system comprises control means communicating with each said apparatus for controlling operation of said apparatus.

At least one said container may be adapted to engage said track by means of wheels on at least one of said object and said track.

At least one said container may be adapted to provide an identification signal to enable said control means to identify said object.

The system may further comprise moving means for loading objects to and/or unloading objects from said track, wherein said moving means is adapted to communicate with said control means.

At least one said object may be adapted to allow at least one said apparatus to pass thereunder when in said second condition.

At least one said object may be a container for containing items.

At least one said apparatus may be adapted to move at least one said object into and/or out of the system.

A preferred embodiment of the invention will now be described, by way of example only and not in any limitative sense, with reference to the accompanying drawings in which:-
Figure 1 is a perspective view of trolleys and automated shuttles of an object handling system embodying the present invention;
Figure 2 is a detailed perspective view of a shuttle of Figure 1 of a first embodiment of the invention;
Figure 3 is a schematic representation of a trolley process using the system of Figure 1;
Figure 4 shows queuing tables for use in the process of Figure 3;
Figure 5 is a side view of a shuttle of a second embodiment of the present invention and a side cross sectional view through a lower surface of a trolley; and
Figure 6 is a schematic view of a control system of the object handling system of Figure 1.

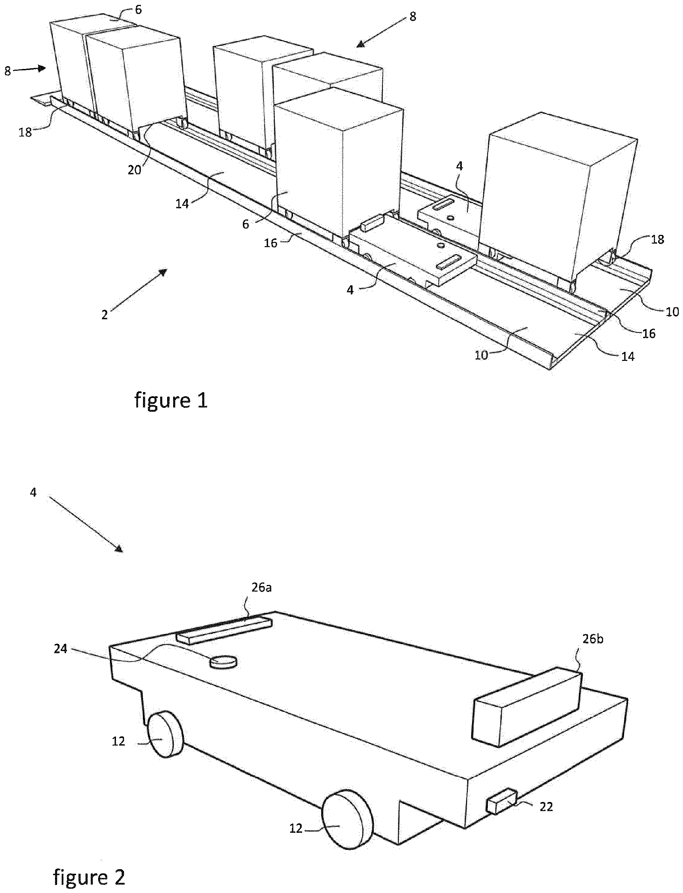

Referring to Figure 1, an object handing system 2 embodying the present invention has transport apparatus in the form of automated shuttles 4 and objects in the form of wheeled trolleys 6 for containing articles and arranged in queues 8 on respective tracks 10. The shuttles 4 have wheels 12 for engaging bases 14 of tracks 10 between rails 16 of the track, and the wheels 12 are driven by suitable drive means such as electric motors to enable the shuttle 4 to move in both directions along the track 10. The trolleys 6 have wheels 18 which engage the rails 16 outwardly of the wheels 12 of the shuttles 4, and have elevated lower surfaces 20 to enable the shuttles 4 to pass along the track 10 under the trolleys 6.

As shown in greater detail in Figure 2, each shuttle 4 has first detector means in the form of a position detector 22 for indicating the position of the shuttle 4 on the track 10, and second detector means in the form of an object location sensing device 24 for identifying a marker on the lower surface 20 of a trolley 6 to determine the position of each trolley 6 in its respective queue 8. The shuttle 4 also has engaging means in the form of a pair of connector devices 26a, 26b mounted to shuttle body 28 and moveable between a retracted position 26a in which the shuttle 4 can move along the track 10 under the trolleys 6 without engaging a trolley 6 and a protruding position 26b for engaging a trolley 6 to enable the shuttle 4 to move the trolley 6 along the track 10.

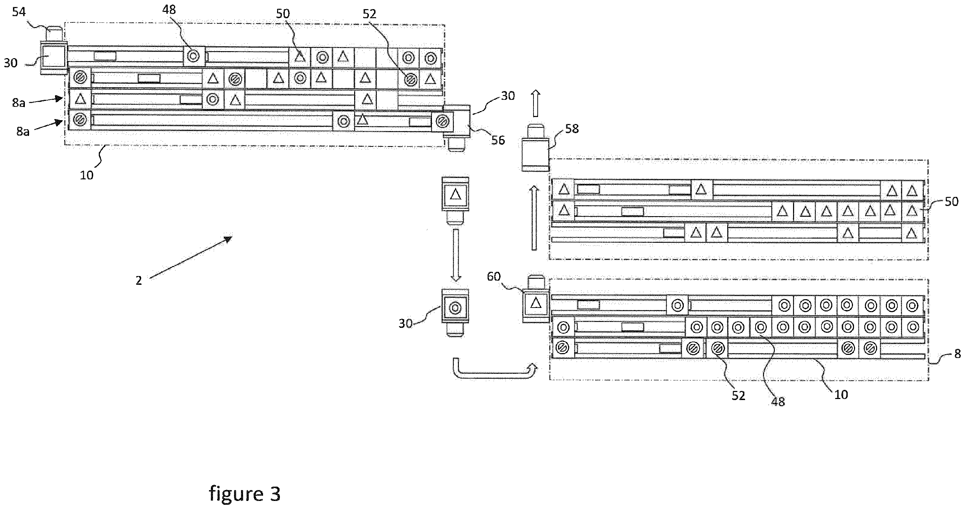

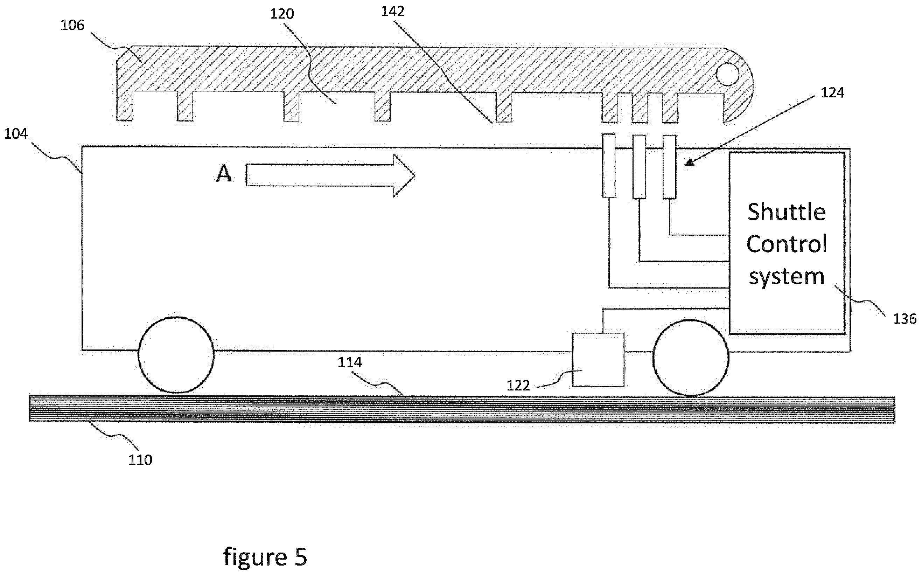

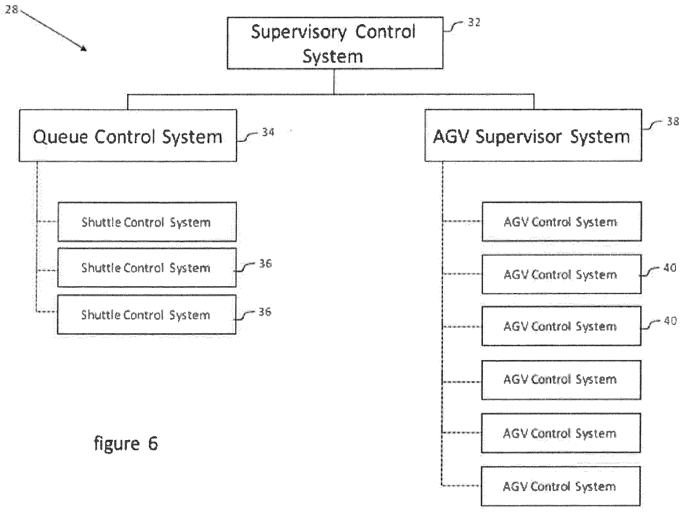

Control means in the form of a control system 28 (Figure 6) communicates with each shuttle 4 to enable movement of the shuttles 4 to be controlled. The system 2 also includes moving means in the form of automated guided vehicles (AGVs) 30 (Figure 3) for loading trolleys 6 onto the tracks 10 and unloading trolleys 6 from the tracks 10. The automated guided vehicles 30 also communicate with the control system 28 as shown in more detail in Figure 6. The control system 28 has a supervisory control system 32 which can be used to supervise and coordinate operation of multiple queues 8 via queue control system 34, which controls individual shuttle control systems 36, 136 on each shuttle (Figure 5) and AGV supervisor system 38 which controls individual AGV control systems 40 on each automated guided vehicle 30, which can in turn be used to coordinate feeding of trolleys 6 to and from the tracks 10. The supervisory control system 32 can also permit coordination of multiple shuttles 4 within the same track 10, to permit simultaneous loading, unloading and movement of trolleys 6 along a queue 8.

Referring to Figure 5, a schematic view of a shuttle 104 of a second embodiment of the invention, located underneath a lower surface 120 of a trolley 106, is shown, in which parts common to the embodiment of Figures 1 to 3 are denoted by like reference numerals but increased by 100. The shuttle moves 104 in the direction of arrow A until the location sensing device 122 views a position marker strip mounted on the floor 114 of the track 110 to detect the position of the shuttle 104 relative to the track 110. At the same time, a series of proximity detectors 124 detect the presence of the lower surface 120 of the trolley 106 above by matching with a unique pattern of support webs 142 arranged on the underside 120 of the trolley 106. The sensors 124 only all move to the on state when they are aligned under the corresponding support webs 142 having the same spacing, and when this occurs, the location sensing device 122 is read so that the position of the base 120 of the trolley 106 relative to the track 110 can be determined, and the distance from this position to the back of the trolley and the front of the trolley can be determined by the shuttle control system 136.

The operation of the system 2 will now be described.

In order to load trolleys 6, 106 to a queue 8, the trolleys 6, 106 can either be presented manually, or automatically via an AGV 10 (Figure 3) to a queue input. The shuttle 4, 104 then moves to position a retracted connector device 26a under the trolley 6, 106 at the queue input, and then engages the trolley 6, 106 to pull the trolley 6, 106 into the queue 8. When the trolley 6, 106 is correctly located in the queue 8, the connector device 26a disengages from the trolley 6, 106 to enable the shuttle 4, 104 to move away along the track 10, 110 to process other tasks.

In order to unload trolleys 6, 106 from the queue 8, the shuttle 4, 104 positions its front connector device 26a behind the object, raises the connector device, and then pushes the trolley 6, 106 from the queue 8. This may move the trolley 6, 106 into engagement with an AGV 30, or into an open space beyond the end of the queue 8.

In order to manage the position of trolleys 6, 106 in the queue 8 and maximise storage and throughput, it is necessary to move trolleys 6, 106 from the body of the queue 8 to take up free space which becomes available at the front of the queue 8 as trolleys 6, 106 are moved from the front of the queue 8. This then enables more trolleys 6, 106 to be added at the input end of the queue 8. As the shuttle 4, 104 moves along the queue 8, it identifies the respective positions of trolleys 6, 106 along the queue by means of the trolley location sensing device 24, 124 and the position measurement system 22, 122. The shuttle 4, 104 can then move one or more trolleys 6, 106 from the body of the queue 8 towards the outfeed end of the queue 8 to free up space.

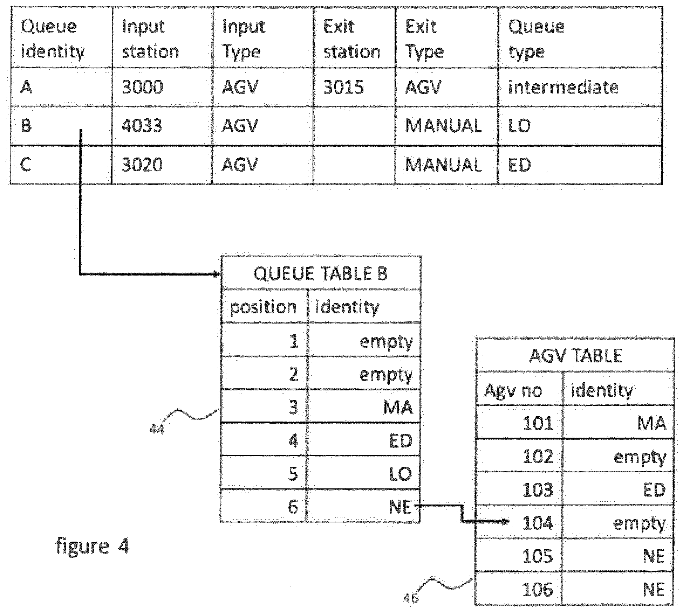

In order to transfer trolleys 6, 106 between queues 8, the automatic guided vehicles 30 can be fitted with suitable attachments to guide and hold trolleys 6, 106 and then move between stations at the input and output ends of queues 8. Each station has a unique identifier at the input and output of each queue 8 since it is a transfer point for an automatic guided vehicle 30. When the shuttle 4, 104 transfers a trolley 6, 106 from the automatic guided vehicle 30 into a queue 8, it adds the trolley's identity characteristic to an empty location in the queue table 44 for that queue 8, as shown in Figure 4. The AGV 30 itself is effectively a queue 8 of length one, and when a trolley 6, 106 moves onto an AGV 30, the trolley characteristic moves from a queue table 44 to a location in corresponding AGV table 46. Similarly, when a trolley 6, 106 is transferred from an AGV 30 to a queue 8, its characteristic is moved from the AGV table 46 to the queue table 44 using information in the queue identity table that links a station number to a queue identity. In this way, it is also possible to have multiple shuttles 4, 104 operating within the same queue 8, in order to reduce the time taken for a shuttle 4, 104 to reach a selected location in the queue 8.

It is also possible to position trolleys 6, 106 in multiple rows prior to loading into road transport vehicles, for example as shown in Figure 3. The queues 8 can be located side by side adjacent to loading bay doors so that transfer times between the queues 8 and the transport vehicles is minimised. As shown in Figure 3, it is also possible to have intermediate queues 8a to assist in sorting trolleys into queues 8 of different categories, transfer between the queues 8, 8a being carried out by the automated guided vehicles 30. The movement of trolleys 6, 106 between the automated guided vehicles 30 along the tracks 10, 110 can be carried out by the shuttles 4, 104.

Figure 3 shows a representation of an unsorted queue 8a and two sorted queues 8, wherein trolleys 6, 106 having different characteristics are shown with different symbols 48, 50, 52. A trolley 6, 106 is delivered to the unsorted queue 8a by means of an automated guided vehicle 30, the identifying characteristic of the trolley 6, 106 having previously been detected and stored in the supervisory control system 32. The supervisory control system 32 then communicates and issues commands to the automated guided vehicles 30 and the automated shuttles 4, 104 to coordinate their operation.

In particular, the input 54, 58, 60 and output position 56 of each queue 8, 8a, identified by a queue identity, is specified as an input station number and an exit station number, as shown in Figure 4. The queue identity points to a queue table 44 which holds the current contents and logical position in the queue 8, 8a, as the actual physical position in the queue 8, 8a need only be known by the automated shuttle 4, 104. For example, from the table 44 labelled queue B it can be determined by the supervisory controller 32 that there are two empty locations for trolley storage in queue B, and locations that are filled contain the characteristic identifier 48, 50, 52of the trolley type. This information can be used by the supervisory control system 32 (Figure 6) to allocate trolleys 6, 106 to particular queues 8, 108, by means of the supervisory control system 32 being linked to a plurality of queue control systems 34 and AGV control systems 40. Each queue control system 34 is linked to multiple shuttle control systems 36, and the AGV supervisor system 38 is linked to multiple AGV control systems 40.

It will be appreciated by persons skilled in the art that the above embodiments have been described by way of example only, and not in any limitative sense, and that various alterations and modifications are possible without departure from the scope of the invention as defined by the appended claims. For example, instead of providing wheels 18 on the trolleys 6, 106, wheels can be provided on the tracks 10, 110 to enable containers without wheels to move along the tracks 10, 110.

## Claims

1. An object handling system (2) comprising:
at least one object (6); and
at least one transport apparatus (4) for transporting objects (6) in the object handling system (2);
control means (28) communicating with each said apparatus (4) for controlling operation of said apparatus (4);
wherein the at least one apparatus (4) comprises:
drive means for moving the apparatus (4) along at least one track (10);
engaging means (26a, 26b) having a first condition, in which the engaging means (26a, 26b) can engage a said object (6) to enable the apparatus (4) to move said object (6) along the track (10), and a second condition, in which the apparatus (4) can move along the track (10) without engaging said object (6);
first detector means (22) for detecting a position of the apparatus (4) relative to the track (10);
and **characterised in that** the at least one transport apparatus (4) comprises a second detector means (24) for detecting a position of the apparatus (4) relative to at least one said object (6) and **in that** the object handling system (2) comprises the at least one track (10) for receiving at least one said object (6) and at least one said apparatus (4).

2. A system (2) according to claim 1, wherein the engaging means (26a, 26b) is moveable relative to an upper surface of a body (28) of the apparatus (4) between said first condition, in which the engaging means (26a, 26b) protrudes from the upper surface, and said second condition.

3. A system (2) according to claim 1 or 2, wherein the engaging means (26a, 26b) is adapted to engage an object (6) adjacent a lower surface (20, 120) of said object (6).

4. A system (2) according to any one of the preceding claims, wherein the second detector means (24) is adapted to detect a marker on a lower surface (20, 120) of at least one said object (6).

5. A system (2) according to claim 4, wherein the first detector means (22) is adapted to detect the position of the apparatus (4) relative to the track (10) in response to detection of a said marker by said second detector means (24).

6. A system (2) according to any one of the preceding claims, wherein the second detector means (24) includes at least one proximity detector.

7. A system (2) according to claim 6, wherein the second detector means (24) includes a plurality of proximity detectors adapted to detect a plurality of features on a lower surface (20, 120) of at least one said object (6).

8. A system (2) according to any preceding claim, wherein at least one said object (6) is adapted to engage said track (10) by means of wheels (18) on at least one of said object (6) and said track (10).

9. A system (2) according to any preceding claim, wherein at least one said object (6) is adapted to provide an identification signal to enable said control means (28) to identify said object (6).

10. A system (2) according to any preceding claim, further comprising moving means (30) for loading objects (6) to and/or unloading objects (6) from said track (10), wherein said moving means (30) is adapted to communicate with said control means (28).

11. A system (2) according to any preceding claim, wherein at least one said object (6) is adapted to allow at least one said apparatus (4) to pass thereunder when in said second condition.

12. A system (2) according to any preceding claim, wherein at least one said object (6) is a container for containing items.

13. A system (2) according to any preceding claim, wherein at least one said apparatus (4) is adapted to move at least one said object (6) into and/or out of the system (2).

## Patentansprüche

1. Ein Objekthandhabungssystem (2), das Folgendes beinhaltet:
mindestens ein Objekt (6); und
mindestens eine Transportvorrichtung (4) zum Transportieren von Objekten (6) in dem Objekthandhabungssystem (2);
ein Steuermittel (28), das mit der Vorrichtung (4) kommuniziert, um den Betrieb der Vorrichtung (4) zu steuern;
wobei die mindestens eine Vorrichtung (4) Folgendes beinhaltet:
Antriebsmittel zum Bewegen der Vorrichtung (4) entlang mindestens einer Bahn (10); ein Eingriffsmittel (26a, 26b), das einen ersten Zustand, in dem das Eingriffsmittel (26a, 26b) in ein Objekt (6) eingreifen kann, um der Vorrichtung (4) zu ermöglichen, das Objekt (6) entlang der Bahn (10) zu bewegen, und einen zweiten Zustand, in dem sich die Vorrichtung (4) entlang der Bahn (10) bewegen kann, ohne in das Objekt (6) einzugreifen, aufweist;
ein erstes Detektormittel (22) zum Detektieren einer Position der Vorrichtung (4) relativ zu der Bahn (10);
und **dadurch gekennzeichnet, dass** die mindestens eine Transportvorrichtung (4) ein zweites Detektormittel (24) zum Detektieren einer Position der Vorrichtung (4) relativ zu dem mindestens einen Objekt (6) beinhaltet, und dass das Objekthandhabungssystem (2) die mindestens eine Bahn (10) zum Aufnehmen des mindestens einen Objekts (6) und der mindestens einen Vorrichtung (4) beinhaltet.

2. System (2) gemäß Anspruch 1, wobei das Eingriffsmittel (26a, 26b) relativ zu einer oberen Oberfläche eines Körpers (28) der Vorrichtung (4) zwischen dem ersten Zustand, in dem das Eingriffsmittel (26a, 26b) von der oberen Oberfläche vorsteht, und dem zweiten Zustand bewegt werden kann.

3. System (2) gemäß Anspruch 1 oder 2, wobei das Eingriffsmittel (26a, 26b) angepasst ist, um in ein Objekt (6) angrenzend an eine untere Oberfläche (20, 120) des Objekts (6) einzugreifen.

4. System (2) gemäß einem der vorhergehenden Ansprüche, wobei das zweite Detektormittel (24) angepasst ist, um eine Markierung auf einer unteren Oberfläche (20, 120) des mindestens einen Objekts (6) zu detektieren.

5. System (2) gemäß Anspruch 4, wobei das erste Detektormittel (22) angepasst ist, um die Position der Vorrichtung (4) relativ zu der Bahn (10) als Reaktion auf die Detektion der Markierung durch das zweite Detektormittel (24) zu detektieren.

6. System (2) gemäß einem der vorhergehenden Ansprüche, wobei das zweite Detektormittel (24) mindestens einen Näherungsdetektor umfasst.

7. System (2) gemäß Anspruch 6, wobei das zweite Detektormittel (24) eine Vielzahl von Näherungsdetektoren umfasst, die angepasst sind, um eine Vielzahl von Merkmalen auf einer unteren Oberfläche (20, 120) des mindestens einen Objekts (6) zu detektieren.

8. System (2) gemäß einem der vorhergehenden Ansprüche, wobei das mindestens eine Objekt (6) angepasst ist, um mit Hilfe von Rädern (18) an mindestens einem von dem Objekt (6) und der Bahn (10) in die Bahn (10) einzugreifen.

9. System (2) gemäß einem der vorhergehenden Ansprüche, wobei das mindestens eine Objekt (6) angepasst ist, um ein Identifikationssignal bereitzustellen, um dem Steuermittel (28) zu ermöglichen, das Objekt (6) zu identifizieren.

10. System (2) gemäß einem der vorhergehenden Ansprüche, das ferner ein Bewegungsmittel (30) zum Laden von Objekten (6) auf und/oder Entladen von Objekten (6) von der Bahn (10) beinhaltet, wobei das Bewegungsmittel (30) angepasst ist, um mit dem Steuermittel (28) zu kommunizieren.

11. System (2) gemäß einem der vorhergehenden Ansprüche, wobei das mindestens eine Objekt (6) angepasst ist, um der mindestens einen Vorrichtung (4) zu ermöglichen, darunter zu fahren, wenn in dem zweiten Zustand.

12. System (2) gemäß einem der vorhergehenden Ansprüche, wobei das mindestens eine Objekt (6) ein Behälter zum Enthalten von Gegenständen ist.

13. System (2) gemäß einem der vorhergehenden Ansprüche, wobei die mindestens eine Vorrichtung (4) angepasst ist, um das mindestens eine Objekt (6) in das System (2) hinein und/oder aus diesem heraus zu bewegen.

## Revendications

1. Un système de manutention d'objet (2) comprenant :
au moins un objet (6) ; et
au moins un appareil de transport (4) destiné à transporter des objets (6) dans le système de manutention d'objet (2) ;
un moyen de commande (28) communicant avec chaque dit appareil (4) pour commander la mise en fonctionnement dudit appareil (4) ;
où l'au moins un appareil (4) comprend :
des moyens d'entraînement destinés à déplacer l'appareil (4) le long d'au moins un chemin de roulement (10) ;
des moyens d'engagement (26a, 26b) ayant un premier état, dans lequel les moyens d'engagement (26a, 26b) peuvent venir en engagement avec un dit objet (6) afin de permettre à l'appareil (4) de déplacer ledit objet (6) le long du chemin de roulement (10), et un deuxième état, dans lequel l'appareil (4) peut se déplacer le long du chemin de roulement (10) sans venir en engagement avec ledit objet (6) ;
un premier moyen détecteur (22) destiné à détecter une position de l'appareil (4) par rapport au chemin de roulement (10) ;
et **caractérisé en ce que** l'au moins un appareil de transport (4) comprend un deuxième moyen détecteur (24) destiné à détecter une position de l'appareil (4) par rapport à au moins un dit objet (6) et **en ce que** le système de manutention d'objet (2) comprend l'au moins un chemin de roulement (10) destiné à recevoir au moins un dit objet (6) et au moins un dit appareil (4).

2. Un système (2) selon la revendication 1, où les moyens d'engagement (26a, 26b) sont mobiles par rapport à une surface supérieure d'un corps (28) de l'appareil (4) entre ledit premier état, dans lequel les moyens d'engagement (26a, 26b) font saillie depuis la surface supérieure, et ledit deuxième état.

3. Un système (2) selon la revendication 1 ou la revendication 2, où les moyens d'engagement (26a, 26b) sont conçus pour venir en engagement avec un objet (6) de façon adjacente à une surface inférieure (20, 120) dudit objet (6).

4. Un système (2) selon n'importe laquelle des revendications précédentes, où le deuxième moyen détecteur (24) est conçu pour détecter un repère sur une surface inférieure (20, 120) d'au moins un dit objet (6).

5. Un système (2) selon la revendication 4, où le premier moyen détecteur (22) est conçu pour détecter la position de l'appareil (4) par rapport au chemin de roulement (10) en réponse à la détection d'un dit repère par ledit deuxième moyen détecteur (24).

6. Un système (2) selon n'importe laquelle des revendications précédentes, où le deuxième moyen détecteur (24) inclut au moins un détecteur de proximité.

7. Un système (2) selon la revendication 6, où le deuxième moyen détecteur (24) inclut une pluralité de détecteurs de proximité conçus pour détecter une pluralité de caractéristiques sur une surface inférieure (20, 120) d'au moins un dit objet (6).

8. Un système (2) selon n'importe quelle revendication précédente, où au moins un dit objet (6) est conçu pour venir en engagement avec ledit chemin de roulement (10) au moyen de roues (18) sur au moins un élément d'entre ledit objet (6) et ledit chemin de roulement (10).

9. Un système (2) selon n'importe quelle revendication précédente, où au moins un dit objet (6) est conçu pour fournir un signal d'identification afin de permettre audit moyen de commande (28) d'identifier ledit objet (6).

10. Un système (2) selon n'importe quelle revendication précédente, comprenant en outre des moyens mobiles (30) destinés à charger des objets (6) jusqu'audit chemin de roulement (10) et/ou décharger des objets (6) à partir dudit chemin de roulement (10), où lesdits moyens mobiles (30) sont conçus pour communiquer avec ledit moyen de commande (28).

11. Un système (2) selon n'importe quelle revendication précédente, où au moins un dit objet (6) est conçu pour laisser passer au moins un dit appareil (4) sous celui-ci lorsqu'il est dans ledit deuxième état.

12. Un système (2) selon n'importe quelle revendication précédente, où au moins un dit objet (6) est un contenant destiné à contenir des articles.

13. Un système (2) selon n'importe quelle revendication précédente, où au moins un dit appareil (4) est conçu pour déplacer au moins un dit objet (6) jusque dans le système (2) et/ou hors du système (2).
